(19) **Europäisches Patentamt / European Patent Office / Office européen des brevets**

(11) **EP 1 735 242 B2**

(12) **NOUVEAU FASCICULE DE BREVET EUROPEEN**
Après la procédure d'opposition

(45) Date de publication et mention de la décision concernant l'opposition:
**08.01.2025 Bulletin 2025/02**

(45) Mention de la délivrance du brevet:
**13.06.2018 Bulletin 2018/24**

(21) Numéro de dépôt: **05753596.5**

(22) Date de dépôt: **05.04.2005**

(51) Classification Internationale des Brevets (IPC):
**C01G 25/00** (2006.01) **C04B 35/486** (2006.01)

(52) Classification Coopérative des Brevets (CPC):
**C01G 25/00; C01G 25/006;** C01P 2006/12;
C01P 2006/13; C01P 2006/16

(86) Numéro de dépôt international:
**PCT/FR2005/000828**

(87) Numéro de publication internationale:
**WO 2005/100248 (27.10.2005 Gazette 2005/43)**

(54) **COMPOSITION À BASE D'OXYDES DE ZIRCONIUM ET D'YTTRIUM, PROCÉDÉ DE PRÉPARATION ET UTILISATION DANS UN SYSTÈME CATALYTIQUE**

ZUSAMMENSETZUNG AUF DER BASIS VON ZIRKONIUM- UND YTTRIUMOXID, VERFAHREN ZU IHRER HERSTELLUNG UND IHRE VERWENDUNG IN EINEM KATALYSATORSYSTEM

ZIRCONIUM AND YTTRIUM OXIDE-BASED COMPOSITION, METHOD FOR PREPARING SAME AND USE THEREOF IN A CATALYST SYSTEM

(84) Etats contractants désignés:
**AT BE BG CH CY CZ DE DK EE ES FI FR GB GR HU IE IS IT LI LT LU MC NL PL PT RO SE SI SK TR**

(30) Priorité: **07.04.2004 FR 0403654**

(43) Date de publication de la demande:
**27.12.2006 Bulletin 2006/52**

(73) Titulaire: **Daiichi Kigenso Kagaku Kogyo Co., Ltd. Osaka-shi, Osaka 541-0041 (JP)**

(72) Inventeurs:
• **LARCHER, Olivier**
  **F-17180 Perigny (FR)**
• **ROHART, Emmanuel**
  **F-17220 Sainte Soulle (FR)**

(74) Mandataire: **Kraus & Lederer PartGmbB**
**Thomas-Wimmer-Ring 15**
**80539 München (DE)**

(56) Documents cités:
EP-A1- 0 320 345     EP-A1- 1 479 651
WO-A1-97/02213     WO-A1-97/43214
WO-A1-98/45212     WO-A2-2004/002893
WO-A2-2004/085314     US-A1- 2003 224 931

• **N.M. GHONEIM ET AL.: "Characteristics and effect of thermal treatment on surface texture of ultrafine zirconia powders", JOURNAL OF MATERIAL SCIENCE, vol. 22, 1987, pages 791 - 797**
• **PATENT ABSTRACTS OF JAPAN vol. 1996, no. 06 28 June 1996 (1996-06-28)**

**Description**

La présente invention concerne une composition à base d'oxyde de zirconium et d'yttrium, son procédé de préparation et son utilisation dans un système catalytique.

On utilise à l'heure actuelle pour le traitement des gaz d'échappement des moteurs à combustion interne (catalyse postcombustion automobile) des catalyseurs dits multifonctionnels. Par multifonctionnels, on entend les catalyseurs capables d'opérer non seulement l'oxydation du monoxyde de carbone et des hydrocarbures présents dans les gaz d'échappement mais également la réduction des oxydes d'azote également présents dans ces gaz (catalyseurs "trois voies"). Les catalyseurs à base d'oxyde de zirconium ou d'oxyde de cérium sont aujourd'hui connus comme particulièrement intéressants pour ce type de réactions.

Pour être efficaces, ces catalyseurs doivent présenter une surface spécifique importante et on cherche toujours des catalyseurs susceptibles de pouvoir être utilisés à des températures de plus en plus hautes et, pour cela, présentant une stabilité améliorée de leur surface spécifique.

L'objet de l'invention est donc la mise au point d'une composition catalytique pouvant répondre à cette caractéristique.

Dans ce but, la composition de l'invention est telle que décrite à la revendication 1.

WO 97/43214 décrit des compositions à base d'oxyde de cérium, de zirconium et éventuellement d'oxyde d'yttrium. L'oxyde de cérium est généralement l'oxyde majoritaire. WO 98/45212 décrit des compositions constituées d'oxydes de cérium et de zirconium. Le procédé de l'invention comporte à l'issue de l'étape de précipitation une étape de chauffage du précipité, à une température qui peut être d'au moins 100°C. EP 0320345 décrit un procédé de préparation d'une poudre fine de zircone stabilisée. Il n'est pas fait mention de surface spécifique après une calcination à 1000°C pendant 10 heures. Les compositions des exemples sont obtenues à une température de calcination d'au plus 700°C.

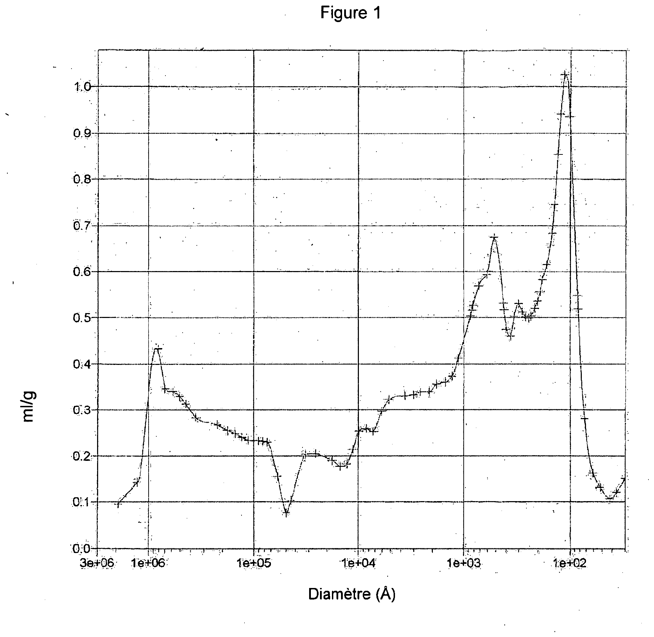

D'autres caractéristiques, détails et avantages de l'invention apparaîtront encore plus complètement à la lecture de la description qui va suivre, ainsi que des divers exemples concrets mais non limitatifs destinés à l'illustrer et du dessin annexé dans lequel la figure 1 est un porogramme d'une composition de l'invention.

Pour la suite de la description, on entend par surface spécifique, la surface spécifique B.E.T. déterminée par adsorption d'azote conformément à la norme ASTM D 3663-78 établie à partir de la méthode BRUNAUER - EMMETT-TELLER décrite dans le périodique " The Journal of the American Chemical Society, 60, 309 (1938)".

La classification périodique des éléments à laquelle il est fait référence dans la présente description est celle publiée dans le Supplément au Bulletin de la Société Chimique de France n° 1 (janvier 1966).

Par terre rare on entend les éléments du groupe constitué par l'yttrium et les éléments de la classification périodique de numéro atomique compris inclusivement entre 57 et 71.

En outre, les calcinations à l'issue desquelles sont données les valeurs de surface sont des calcinations sous air sauf indication contraire.

Les teneurs sont données en oxydes sauf indication contraire.

Les caractéristiques principales des compositions de l'invention sont la nature de leurs constituants et leur surface spécifique.

Les compositions de l'invention sont choisies parmi l'une des deux compositions suivantes :

- Composition consistant en de l'oxyde de zirconium $ZrO_2$ en tant que constituant majoritaire de la composition et d'un additif qui est l'oxyde d'yttrium, présentant une surface spécifique après calcination sous air à 1000 °C pendant 10 heures comprise entre 12 et 20 $m^2/g$ ;

- Composition consistant en de l'oxyde de zirconium $ZrO_2$ en tant que constituant majoritaire de la composition et d'additifs qui sont l'oxyde d'yttrium et au moins un autre oxyde choisi parmi les oxydes de praséodyme, de lanthane et de néodyme, présentant une surface spécifique après calcination sous air à 1000 °C pendant 10 heures comprise entre 12 et 55 $m^2/g$.

La teneur en additif est d'au plus 50% en masse. Cette teneur est exprimée en masse d'oxyde de l'additif ou de l'ensemble des additifs dans le cas de compositions à plusieurs additifs, par rapport à la masse de la composition dans son ensemble (oxyde de zirconium et oxyde(s) d'additif(s)). Cette teneur en additif peut varier dans une large gamme et elle peut être plus notamment comprise entre 5% et 40% et plus particulièrement entre 10% et 40%. Cette teneur peut être tout particulièrement comprise entre 10% et 30%.

L'autre caractéristique principale des compositions de l'invention est leur surface spécifique élevée à haute température telle que stipulée à la revendication 1. Dans les conditions de calcination de la revendication 1, cette surface peut être d'au moins 14 $m^2/g$. Dans le cas de la composition consistant en de l'oxyde de zirconium $ZrO_2$ en tant que constituant majoritaire de la composition et d'additifs qui sont l'oxyde d'yttrium, et au moins un autre oxyde choisi parmi les oxydes de praséodyme, de lanthane et de néodyme, cette surface peut être d'au moins 25 $m^2/g$ et plus particulièrement d'au moins 30 m$^2$/g et encore plus particulièrement d'au moins 40 m$^2$/g, toujours dans les mêmes conditions de calcination. On peut noter que dans le cas où l'additif est l'yttrium, la surface est d'au plus 20 m$^2$/g et dans le cas où les additifs sont l'yttrium et au moins un autre oxyde choisi parmi les oxydes de praséodyme, de lanthane et de néodyme, la surface est d'au plus 55 m$^2$/g.

A des températures plus basses que celles qui ont été mentionnées ci-dessus, par exemple après calcination à 900°C pendant 4 heures, les compositions peuvent présenter une surface spécifique d'au moins 25 m$^2$/g, plus particulièrement d'au moins 30 m$^2$/g.

Les compositions de l'invention peuvent se présenter dans certains cas sous la forme de solutions solides de l'additif dans l'oxyde de zirconium.

Dans ce cas, les diagrammes en diffraction RX de ces compositions révèlent l'existence d'une phase unique et correspondant à celle d'un oxyde de zirconium cristallisé dans le système tétragonal ou cubique, traduisant ainsi l'incorporation de l'additif dans le réseau cristallin de l'oxyde de zirconium, et donc l'obtention d'une solution solide vraie. Les compositions peuvent aussi se présenter sous la forme d'un mélange de phases, notamment dans le cas des fortes teneurs en additif, c'est à dire d'au moins 40%, ou encore dans le cas de faibles teneurs en additif, c'est à dire inférieure à 10% et, dans ce dernier cas, après calcination à une température égale ou supérieure à 900°C.

Les compositions de l'invention présentent par ailleurs une porosité spécifique. Elles contiennent en effet des mésopores, c'est à dire des pores dont la taille est comprise entre 5 nm et 500 nm et plus particulièrement entre 10 nm et 200 nm et ceci même après calcination à température élevée. Ces valeurs de taille sont obtenues par porosimétrie au mercure (analyse faite avec un porosimètre Autopore 9410 de Micromeritic's comprenant deux postes basse pression et un poste haute pression). Ces mésopores peuvent contribuer à une part importante du volume poreux total, par exemple celles dont la taille est comprise entre 5 nm et 500 nm peuvent apporter au moins 40%, plus particulièrement au moins 60% de ce volume poreux total. On peut aussi noter que les compositions de l'invention peuvent comporter deux populations de mésopores dont la taille est centrée respectivement autour de 10 nm environ (10-12 nm) et de 60 nm environ, ces populations étant mises en évidence dans les porogrammes par la présence de deux pics centrés sur ces valeurs. Enfin, la courbe de porogramme des compositions de l'invention donnant le volume poreux cumulatif en fonction du diamètre des pores présente un profil sensiblement linéaire ce qui montre une contribution sensiblement homogène au volume poreux total de toutes les pores de diamètre compris entre environ 5 nm et 1 mm.

Les compositions de l'invention peuvent présenter une teneur très faible en anion sulfate. Cette teneur est généralement d'au plus 100 ppm et de préférence d'au plus 50 ppm (rapport massique SO$_4^-$/ensemble de la composition).

Le procédé de préparation des compositions de l'invention va maintenant être décrit. Ce procédé comprend les étapes suivantes :

- (a) on forme un mélange comprenant des composés du zirconium, de l'additif et, le cas échéant, de l'aluminium ou du silicium ;
- (b) on met en présence ledit mélange avec un composé basique ce par quoi on obtient un précipité ;
- (c) on chauffe en milieu liquide ledit précipité ;
- (d) on ajoute au précipité obtenu à l'étape précédente un composé choisi parmi les tensioactifs anioniques, les tensioactifs non ioniques, les polyéthylène-glycols, les acides carboxyliques et leurs sels et les tensioactifs du type éthoxylats d'alcools gras carboxyméthylés ;
- (e) on calcine le précipité ainsi obtenu.

La première étape du procédé consiste donc à préparer un mélange en milieu liquide d'un composé du zirconium, d'un composé de l'yttrium et éventuellement d'un composé d'un autre additif ou d'aluminium ou de silicium. Le mélange se fait généralement dans un milieu liquide qui est l'eau de préférence.

Les composés sont de préférence des composés solubles. Ce peut être notamment des sels de zirconium, d'yttrium, d'un autre additif et de l'aluminium. Ces composés peuvent être choisis par exemple parmi les nitrates, les acétates ou les chlorures. A titre d'exemples, on peut ainsi citer le nitrate de zirconyle ou le chlorure de zirconyle. Le nitrate de zirconyle est utilisé le plus généralement.

Il est aussi possible d'utiliser un sol comme composé de départ du zirconium. Par sol on désigne tout système constitué de fines particules solides de dimensions colloïdales, c'est à dire des dimensions comprises entre environ 1nm et environ 500nm, à base d'un composé de zirconium ce composé étant généralement un oxyde et/ou un oxyde hydraté de zirconium, en suspension dans une phase liquide aqueuse, lesdites particules pouvant en outre, éventuellement, contenir des quantités résiduelles d'ions liés ou adsorbés tels que par exemple des nitrates, des acétates, des chlorures ou des ammoniums. On notera que dans un tel sol, le zirconium peut se trouver soit totalement sous la forme de colloïdes, soit simultanément sous la forme d'ions et sous la forme de colloïdes.

Le mélange de départ peut être indifféremment obtenu soit à partir de composés initialement à l'état solide que l'on introduira par la suite dans un pied de cuve d'eau par exemple, soit encore directement à partir de solutions de ces composés puis mélange, dans un ordre quelconque, desdites solutions.

Dans la deuxième étape (b) du procédé, on met en présence ledit mélange avec un composé basique. On peut utiliser comme base ou composé basique les produits du type hydroxyde. On peut citer les hydroxydes d'alcalins ou d'alcalino-terreux. On peut aussi utiliser les amines secondaires, tertiaires ou quaternaires. Toutefois, les amines et l'ammoniaque peuvent être préférés dans la mesure où ils diminuent les risques de pollution par les cations alcalins ou alcalino terreux. On peut aussi mentionner l'urée. Le composé basique est généralement utilisé sous forme d'une solution aqueuse.

La manière d'effectuer la mise en présence du mélange et de la solution, c'est à dire l'ordre d'introduction de ceux-ci n'est pas critique. Toutefois, cette mise en présence peut se faire en introduisant le mélange dans la solution du composé basique.

La mise en présence ou la réaction entre le mélange et la solution, notamment l'addition du mélange dans la solution du composé basique, peut être effectuée en une seule fois, graduellement ou en continu, et elle est de préférence réalisée sous agitation. Elle est de préférence conduite à température ambiante (20-25°C).

L'étape suivante (c) du procédé est l'étape de chauffage du précipité en milieu liquide. Ce chauffage peut être réalisé directement sur le milieu réactionnel obtenu après réaction avec le composé basique ou sur une suspension obtenue après séparation du précipité du milieu réactionnel, lavage éventuel et remise dans l'eau du précipité. La température à laquelle est chauffé le milieu est d'au moins 100°C, plus particulièrement d'au moins 130°C et encore plus particulièrement d'au moins 150 $m^2$/g. L'opération de chauffage peut être conduite en introduisant le milieu liquide dans une enceinte close (réacteur fermé du type autoclave). Dans les conditions de températures données ci-dessus, et en milieu aqueux, on peut préciser, à titre illustratif, que la pression dans le réacteur fermé peut varier entre une valeur supérieure à 1 Bar ($10^5$ Pa) et 165 Bar (1,65. $10^7$ Pa), de préférence entre 5 Bar (5. $10^5$ Pa) et 165 Bar (1,65. $10^7$ Pa). On peut aussi effectuer le chauffage dans un réacteur ouvert pour les températures voisines de 100°C. Le chauffage peut être conduit soit sous air, soit sous atmosphère de gaz inerte, de préférence l'azote dans ce dernier cas. La durée du chauffage peut varier dans de larges limites, par exemple entre 1 et 48 heures, de préférence entre 2 et 24 heures. De même, la montée en température s'effectue à une vitesse qui n'est pas critique, et on peut ainsi atteindre la température réactionnelle fixée en chauffant le milieu par exemple entre 30 minutes et 4 heures, ces valeurs étant données à titre tout à fait indicatif.

Il est possible de faire plusieurs chauffages. Ainsi, on peut remettre en suspension dans l'eau, le précipité obtenu après l'étape de chauffage et éventuellement un lavage puis effectuer un autre chauffage du milieu ainsi obtenu. Cet autre chauffage se fait dans les mêmes conditions que celles qui ont été décrites pour le premier.

L'étape suivante (d) du procédé consiste à ajouter au précipité issu de l'étape précédente un composé qui est choisi parmi les tensioactifs anioniques, les tensioactifs non ioniques, les polyéthylène-glycols et les acides carboxyliques et leurs sels.

En ce qui concerne ce composé on pourra se référer à l'enseignement de la demande WO-98/45212 et utiliser les tensioactifs décrits dans ce document. On peut mentionner comme tensioactifs du type anionique les éthoxycarboxylates, les acides gras éthoxylés, les sarcosinates, les esters phosphates, les sulfates comme les sulfates d'alcool les sulfates d'éther alcool et les éthoxylates d'alcanolamide sulfatés, les sulfonates comme les sulfosuccinates, les alkyl benzène ou alkyl naphtalène sulfonates.

Comme tensioactif non ionique on peut mentionner les tensioactifs acétyléniques, les éthoxylates d'alcool, les alcanolamides, les oxydes d'amine, les alcanolamides éthoxylés, les amines éthoxylées à longues chaînes, les copolymères oxyde d'éthylène/oxide de propylène, les dérivés du sorbiatan, l'éthylène glycol, le propylène glycol, le glycérol, les esters polyglyceryle et leurs dérivés éthoxylés, les alkylamines, les alkylimidazolines, les huiles éthoxylées et les éthoxylates d'alkylphénol. On peut citer notamment les produits vendus sous les marques IGEPAL®, DOWANOLO, RHODAMOX® et ALKAMIDE®.

En ce qui concerne les acides carboxyliques, on peut utiliser notamment les acides mono- ou dicarboxyliques aliphatiques et parmi ceux-ci plus particulièrement les acides saturés. On peut utiliser aussi des acides gras et plus particulièrement les acides gras saturés. On peut citer ainsi notamment les acides formique, acétique, proprionique, butyrique, isobutyrique, valérique, caproïque, caprylique, caprique, laurique, myristique, palmitique. Comme acides dicarboxyliques, on peut mentionner les acides oxalique, malonique, succinique, glutarique, adipique, pimélique, subérique, azélaïque et sébacique.

Les sels des acides carboxyliques peuvent aussi être utilisés, notamment les sels ammoniacaux. A titre d'exemple, on peut citer plus particulièrement l'acide laurique et le laurate d'ammonium.

Enfin, il est possible d'utiliser un tensioactif qui est choisi parmi ceux du type éthoxylats d'alcools gras carboxyméthylés. Par produit du type éthoxylats d'alcool gras carboxyméthylés on entend les produits constitués d'alcools gras éthoxylés ou propoxylés comportant en bout de chaîne un groupement -$CH_2$-COOH. Ces produits peuvent répondre à la formule :

$$R_1\text{-O-}(CR_2R_3\text{-}CR_4R_5\text{-O})_n\text{-}CH_2\text{-COOH}$$

dans laquelle $R_1$ désigne une chaîne carbonée, saturée ou insaturée, dont la longueur est généralement d'au plus 22 atomes de carbone, de préférence d'au moins 12 atomes de carbone; $R_2$, $R_3$, $R_4$ et $R_5$ peuvent être identiques et représenter l'hydrogène ou encore $R_2$ peut représenter un groupe $CH_3$ et $R_3$, $R_4$ et $R_5$ représentent l'hydrogène; n est un nombre entier non nul pouvant aller jusqu'à 50 et plus particulièrement compris entre 5 et 15, ces valeurs étant incluses.

On notera qu'un tensio-actif peut être constitué d'un mélange de produits de la formule ci-dessus pour lesquels $R_1$ peut être saturé et insaturé respectivement ou encore des produits comportant à la fois des groupements $-CH_2-CH_2-O-$ et $-C(CH_3)-CH_2-O-$.

L'addition du tensio-actif peut se faire de deux manières. Il peut être ajouté directement dans la suspension de précipité issue de l'étape précédente de chauffage (c). Il peut aussi être ajouté au précipité solide après séparation de celui-ci par tout moyen connu du milieu dans lequel a eu lieu le chauffage.

La quantité de tensio-actif utilisée, exprimée en pourcentage en masse de tensio-actif par rapport à la masse de la composition calculée en oxyde, est généralement comprise entre 5% et 100%, plus particulièrement entre 15% et 60% et encore plus particulièrement entre 35% et 50%.

Selon une variante du procédé de l'invention, il est possible, à l'issue de l'étape (d) qui vient d'être décrite de procéder à un broyage du précipité. Ce broyage peut être réalisé de différentes manières.

Une première manière consiste à réaliser un broyage à haute énergie du type broyage humide. Un tel broyage se fait sur un précipité humide qui a été obtenu par exemple après addition du tensio-actif au précipité solide. Le broyage humide peut se faire dans un broyeur à billes par exemple.

Une seconde manière consiste à effectuer un broyage à énergie moyenne en soumettant à un cisaillement une suspension du précipité, par exemple en utilisant un broyeur colloïdal ou une turbine d'agitation. Cette suspension peut être une suspension aqueuse qui a été obtenue après remise en dispersion dans l'eau du précipité obtenu à l'issue des étapes (d).

Dans une dernière étape du procédé selon l'invention, le précipité récupéré est ensuite calciné. On peut laver éventuellement le précipité à l'eau avant la calcination. Cette calcination permet de développer la cristallinité du produit formé et elle peut être également ajustée et/ou choisie en fonction de la température d'utilisation ultérieure réservée à la composition selon l'invention, et ceci en tenant compte du fait que la surface spécifique du produit est d'autant plus faible que la température de calcination mise en oeuvre est plus élevée. Une telle calcination est généralement opérée sous air, mais une calcination menée par exemple sous gaz inerte ou sous atmosphère contrôlée (oxydante ou réductrice) n'est bien évidemment pas exclue.

En pratique, on limite généralement la température de calcination à un intervalle de valeurs comprises entre 500°C et 1100°C, plus particulièrement entre 600°C et 900°C.

Les compositions de l'invention telles que décrites plus haut ou telles qu'obtenues dans le procédé étudié précédemment se présentent sous forme de poudres mais elles peuvent éventuellement être mises en forme pour se présenter sous forme de granulés, billes, cylindres ou nids d'abeille de dimensions variables.

Les compositions de l'invention peuvent être utilisées comme catalyseurs ou supports de catalyseur. Ainsi, l'invention concerne aussi des systèmes catalytiques comprenant les compositions de l'invention. Pour de tels systèmes, ces compositions peuvent ainsi être appliquées sur tout support utilisé habituellement dans le domaine de la catalyse, c'est à dire notamment des supports inertes thermiquement. Ce support peut être choisi parmi l'alumine, l'oxyde de titane, l'oxyde de cérium, la silice, les spinelles, les zéolites, les silicates, les phosphates de silicoaluminium cristallins, les phosphates d'aluminium cristallins.

Les compositions peuvent aussi être utilisées dans des systèmes catalytiques comprenant un revêtement (wash coat) à propriétés catalytiques et à base de ces compositions, sur un substrat du type par exemple monolithe métallique ou en céramique. Le revêtement peut comporter lui aussi un support du type de ceux mentionnés plus haut. Ce revêtement est obtenu par mélange de la composition avec le support de manière à former une suspension qui peut être ensuite déposée sur le substrat.

Dans le cas de ces utilisations en catalyse, les compositions de l'invention sont employées en combinaison avec des métaux de transition; elles jouent ainsi le rôle de support pour ces métaux. Par métaux de transition, on entend les éléments des groupes IIIA à IIB de la classification périodique. Comme métaux de transition, on peut citer plus particulièrement le fer, le manganèse et le cuivre ainsi que les métaux précieux, comme le platine, le rhodium, le palladium, l'argent ou l'iridium. La nature de ces métaux et les techniques d'incorporation de ceux-ci dans les compositions supports sont bien connues de l'homme du métier. Par exemple, les métaux peuvent être incorporés aux compositions par imprégnation.

Les teneurs en métal précité des composition correspondent aux teneurs généralement utilisées dans les catalyseurs pour obtenir une activité catalytique. A titre d'exemple, cette teneur est d'au plus 5%, notamment d'au plus 1%. Elle peut être plus particulièrement d'au plus 0,5% et même d'au plus 0,25%. Des teneurs supérieures à 5% n'ont généralement pas d'intérêt d'un point de vue économique. Ces teneurs sont exprimées en pourcentage massique de métal par rapport à la composition.

Les systèmes catalytiques et plus particulièrement les compositions de l'invention peuvent trouver de très nombreuses applications. Ils sont ainsi particulièrement bien adaptés à, et donc utilisables, dans la catalyse de diverses réactions telles que, par exemple, la déshydratation, l'hydrosulfuration, l'hydrodénitrification, la désulfuration, l'hydrodésulfuration, la déshydrohalogénation, le reformage, le reformage à la vapeur, le craquage, l'hydrocraquage, l'hydrogénation, la déshydrogénation, l'isomérisation, la dismutation, l'oxychloration, la déshydrocyclisation d'hydrocarbures ou autres composés organiques, les réactions d'oxydation et/ou de réduction, la réaction de Claus, le traitement des gaz d'échappement des moteurs à combustion interne, la démétallation, la méthanation, la shift conversion, l'oxydation catalytique des suies émises par les moteurs à combustion interne comme les moteurs diesel ou essence fonctionnant en régime pauvre.

Les systèmes catalytiques et plus particulièrement les compositions de l'invention sont particulièrement bien adaptés au traitement des gaz d'échappement des moteurs à combustion interne comme les moteurs diesel ou essence fonctionnant en régime pauvre. Ce traitement peut être plus précisément un traitement d'élimination des NOx par réaction en continu avec les hydrocarbures en mélange pauvre (Catalyse HC-DeNOx).

De ce fait, l'invention concerne aussi un procédé de traitement des gaz d'échappement des moteurs à combustion interne qui est caractérisé en ce qu'on utilise à titre de catalyseur un système catalytique tel que décrit ci-dessus ou une composition selon l'invention et telle que décrite précédemment.

On notera enfin que dans un procédé de ce type, les compositions de l'invention peuvent être utilisées en association avec des compositions à base d'oxyde de cérium stabilisé par des additifs comme l'oxyde de zirconium ou comme un oxyde d'une terre rare, l'oxyde de zirconium et l'oxyde de terre rare pouvant être utilisés en combinaison dans ce cas, ou encore en association avec des compositions à base d'oxyde de zirconium, cet oxyde pouvant lui aussi être dopé ou stabilisé par une terre rare, comme le cérium notamment. Ces associations conduisent à des sytèmes permettant une conversion de l'ensemble des polluants émis par un moteur dès les basses températures.

Des exemples vont maintenant être donnés.

EXEMPLE 1

Cet exemple concerne la préparation d'une composition à 90% de zirconium et à 10% en yttrium, ces proportions étant exprimées en pourcentages massiques des oxydes $ZrO_2$ et $Y_2O_3$.

Dans un bécher agité, on introduit 750 ml de nitrate de zirconium (120 g/l) et 25 ml de nitrate de yttrium (400 g/l). On complète ensuite avec de l'eau distillée de façon à obtenir 1 litre d'une solution de ces deux nitrates. Dans un réacteur agité à fond rond, on introduit 202 ml d'une solution d'ammoniaque (12 mol/l) et on complète ensuite avec de l'eau distillée de façon à obtenir un volume total de 1 litre. La solution de nitrates est introduite en une heure dans le réacteur sous agitation constante.

La solution obtenue est placée dans un autoclave en acier inoxydable équipé d'un mobile d'agitation. La température du milieu est portée à 150°C pendant 2 heures sous agitation.

La suspension ainsi obtenue est alors filtrée sur büchner. On récupère un précipité de couleur blanche contenant 17 % en masse d'oxyde. On prélève 100 g de ce précipité.

Parallèlement, on a préparé un gel de laurate d'ammonium dans les conditions suivantes : on introduit 250 g d'acide laurique dans 135 ml d'ammoniaque (12 mol/l) et 500 ml d'eau distillée, puis on homogénéise à l'aide d'une spatule. 20,3 g de ce gel sont ajoutés à 100g du précipité puis l'ensemble est malaxé jusqu'à obtention d'une pâte homogène. Le produit obtenu est ensuite porté à 500°C pendant 4 heures en palier.

Il présente les caractéristiques suivantes de surface après calcination aux températures et pour les durées indiquées :

$$4h\ 900°C = 32\ m^2/g$$

$$10h\ 1000°C = 15\ m^2/g$$

$$10h\ 1200°C = 1,5\ m^2/g$$

EXEMPLE 2

Cet exemple concerne la préparation d'une composition à 90 % en zirconium, 5 % en néodyme et 5 % en yttrium, ces proportions étant exprimées en pourcentages massiques des oxydes $ZrO_2$, $Nd_2O_3$ et $Y_2O_3$. Dans un bécher agité, on introduit 750 ml de nitrate de zirconium (120 g/l), 9,5 ml d'une solution de nitrate de néodyme (524 g/l) et 13 ml d'une solution de nitrate d'yttrium (386 g/l). On complète ensuite avec de l'eau distillée de façon à obtenir 1 litre d'une solution de ces trois nitrates.

Dans un réacteur agité à fond rond, on introduit 194 ml d'une solution d'ammoniaque et on complète ensuite avec de l'eau distillée de façon à obtenir un volume total de 1 litre. La solution des nitrates est introduite en une heure dans le réacteur sous agitation constante.

La solution obtenue est placée dans un autoclave en acier inoxydable équipé d'un mobile d'agitation. La température du milieu est portée à 150°C pendant 2 heures sous agitation.

La suspension ainsi obtenue est alors filtrée sur büchner. On récupère un précipité de couleur blanche contenant 19,1 % en masse d'oxyde. On prélève 100 g de ce précipité.

Parallèlement, on a préparé un gel de laurate d'ammonium dans les conditions suivantes : on introduit 250 g d'acide laurique dans 135 ml d'ammoniaque (12 mol/l) et 500 ml d'eau distillée, puis on homogénéise à l'aide d'une spatule. 22,8 g de ce gel sont ajoutés à 100g du précipité puis l'ensemble est malaxé jusqu'à obtention d'une pâte homogène.

Le produit obtenu est ensuite porté à 700°C pendant 4 heures en palier. Il présente les caractéristiques suivantes de surface après calcination aux températures et pour les durées indiquées :

$$4h\ 900°C = 52\ m^2/g$$

$$10h\ 1000 = 32,8\ m^2/g$$

$$10h\ 1100 = 14,7\ m^2/g$$

$$10h\ 1200 = 3,2\ m^2/g$$

EXEMPLE 3

Cet exemple décrit un test catalytique pour un catalyseur préparé à partir d'une composition selon l'invention.

a) Préparation du catalyseur

Le catalyseur à 0,1% en masse d'élément rhodium métallique par rapport à la masse de l'ensemble du catalyseur est préparé par imprégnation de nitrate de rhodium par voie humide sur le produit de l'exemple 1 obtenu après 4h de calcination à 500°C. On fait subir ensuite au produit imprégné une évaporation lente, un séchage et enfin une calcination 4h à 500°C sous air.

Le catalyseur sous forme de poudre est ensuite vieilli pendant 6 heures à 1100°C sous un mélange oxydo réducteur (flux alternés de 5 minutes de 1,8% de CO et 10% de $H_2O$ d'une part puis de 1,8% de $O_2$ et 10% de $H_2O$ d'autre part. Le vieillissement se fait dans un réacteur tubulaire en quartz, traversé par le flux de gaz.

b) Conditions de test

Débit des gaz : 30l/h ; Masse de catalyseur : 20 mg (fraction granulométrique 100-200 microns) dilué avec 150 mg de SiC. La composition des gaz est donnée dans le tableau ci-dessous.

| Composant | Mélange pauvre Richesse : 0, 979 % en volume | Mélange riche Richesse : 1,024 % en volume |
|---|---|---|
| CO2 | 14,00 | 14,00 |
| H2O | 10,00 | 10,00 |
| CO | 0,40 | 1,40 |
| O2 | 0,80 | 0,40 |
| C3H6 | 0,0375 | 0,0375 |
| C3H8 | 0,0125 | 0,0125 |
| NO | 0,095 | 0,095 |
| N2 | Complément à 100 | Complément à 100 |

On observe les résultats suivants :

- En mélange riche, la température d'amorçage à 20% de conversion pour le NO est de 340°C, celle pour le $C_3H_6$ est de 345°C. Ce sont donc des températures faibles dans les deux cas.
- En mélange pauvre, les températures d'amorçage à 20% de conversion pour le NO, pour le $C_3H_6$ et pour le CO sont respectivement de 331°C, 330°C et 300°C.

L'ensemble de ces résultats montre l'efficacité à basses températures (températures d'amorçage inférieures à 350°C) des catalyseurs à base des compositions de l'invention.

EXEMPLE 4 COMPARATIF

On prépare dans cet exemple une composition à base d'oxydes de zirconium et de cérium et dont la surface spécifique est stabilisée par des oxydes de lanthane et de néodyme. Cette composition répond à la formule $ZrO_2/CeO_2/La_2O_3/Nd_2O_3$ de proportions respectives en poids de ces oxydes de 75/20/2,5/2,5.

On procède comme dans l'exemple 2 en utilisant pour 100 g de produit les quantités suivantes de solutions :

- 268 ml de nitrate de zirconium (C = 280 g/l)
- 79 ml de nitrate de cérium (à une concentration de 236,5 g/l de $Ce^{4+}$, de 15,5 g/l de $Ce^{3+}$ et d'acidité libre de 0,7N)
- 5,5 ml de nitrate de lanthane (C = 454 g/l)
- 4,8 ml de nitrate de néodyme (C = 524 g/l)

Le mode de préparation est identique à celui décrit dans l'exemple 2. Toutefois, le précipité n'est pas mélangé au tensio-actif, il est directement calciné. Le produit obtenu après calcination 4 heures à 1000°C présente une surface spécifique de 44 $m^2$/g et après calcination 4 heures à 1100°C une surface spécifique de 18 $m^2$/g. On prépare par ailleurs un catalyseur à 0,1% en masse d'élément rhodium métallique par rapport à la masse de l'ensemble du catalyseur par imprégnation de nitrate de rhodium par voie humide sur la composition préparée de la manière qui vient d'être décrite et obtenu après 4h de calcination à 500°C.

Ce catalyseur ainsi préparé est soumis au même vieillissement à 1100°C et au même test que décrit ci-dessus dans l'exemple 3. On donne dans le tableau ci-dessous, les résultats concernant les températures d'amorçage à 20 % (Ta) pour les produits des exemples 1 et 4.

| Catalyseur | Ta NO Mélange pauvre (°C) | Ta $C_3H_6$ Mélange pauvre (°C) | Ta NO Mélange riche (°C) | Ta $C_3H_6$ Mélange riche (°C) |
|---|---|---|---|---|
| Exemple 4 | 385 | 400 | 405 | 430 |
| Exemple 1 | 331 | 330 | 340 | 345 |

Les températures d'amorçage sont nettement supérieures dans le cas du produit de l'exemple comparatif.

EXEMPLE 5

Cet exemple concerne une composition à 90% de zirconium, 5% d'yttrium et 5% de lanthane, ces proportions étant exprimées en pourcentages massiques des oxydes $ZrO_2$, $Y_2O_3$ et $La_2O_3$.

Dans un bécher agité, on introduit 310 ml de nitrate de zirconium (290 g/l), 23,8 ml de nitrate d'yttrium (210 g/l) et 11 ml de nitrate de lanthane (454 g/l). On complète ensuite avec de l'eau distillée de façon à obtenir 1 litre d'une solution de nitrates.

Dans un réacteur agité, on introduit 197 ml d'une solution d'ammoniaque (12 mol/l) et on complète ensuite avec de l'eau distillée de façon à obtenir un volume total de 1 litre. La solution de nitrates est introduite en une heure dans le réacteur sous agitation constante.

La solution obtenue est placée dans un autoclave en acier inoxydable équipé d'un mobile d'agitation. La température du milieu est portée à 150°C pendant 2 heures sous agitation. On ajoute à la suspension ainsi obtenue 33 grammes d'acide laurique. La suspension est maintenue sous agitation pendant 1 heure.

La suspension est alors filtrée. On récupère un précipité de couleur blanche. Le produit obtenu est ensuite porté à 850°C pendant 3 heures en palier.

Il présente les caractéristiques suivantes de surface après calcination aux températures et pour les durées indiquées :

$$4\text{h } 900°C = 57 \text{ m}^2/\text{g}$$

$$4\text{h } 1000°C = 48 \text{ m}^2/\text{g}$$

$$10\text{h } 1000°C = 43 \text{ m}^2/\text{g}$$

$$4\text{h } 1100°C = 26 \text{ m}^2/\text{g}$$

$$10\text{h } 1200°C = 2,5 \text{ m}^2/\text{g}$$

L'analyse RX montre qu'entre 900°C et 1000°C le produit se présente sous la forme d'une phase cubique unique. A 1100°C, un très faible dédoublement de deux pics de diffraction (respectivement vers $2\theta = 35°$ et 60°) montre que le diagramme obtenu est attribuable à une phase tétragonale unique.

EXEMPLE 6

Cet exemple concerne une composition à 80% de zirconium, 5% d'yttrium et 15% de lanthane, ces proportions étant exprimées en pourcentages massiques des oxydes $ZrO_2$, $Y_2O_3$ et $La_2O_3$.
Dans un bécher agité, on introduit 276 ml de nitrate de zirconium (290 g/l), 23,8 ml de nitrate d'yttrium (210 g/l) et 33 ml de nitrate de lanthane (454 g/l). On complète ensuite avec de l'eau distillée de façon à obtenir 1 litre d'une solution de nitrates.
Dans un réacteur agité, on introduit 199,5 ml d'une solution d'ammoniaque (12 mol/l) et on complète ensuite avec de l'eau distillée de façon à obtenir un volume total de 1 litre. La solution de nitrates est introduite en une heure dans le réacteur sous agitation constante.
La solution obtenue est placée dans un autoclave en acier inoxydable équipé d'un mobile d'agitation. La température du milieu est portée à 150°C pendant 2 heures sous agitation.
On ajoute à la suspension ainsi obtenue 45 grammes d'acide laurique. La suspension est maintenue sous agitation pendant 1 heure. La suspension est alors filtrée sur un filtre Büchner, puis on lave le précipité filtré à l'eau avec l'équivalent, en volume, des eaux-mères de filtration. On récupère enfin un précipité de couleur blanche. Le produit obtenu est ensuite porté à 700°C pendant 4 heures en palier.
Il présente les caractéristiques suivantes de surface après calcination aux températures et pour les durées indiquées :

$$4\text{h } 900°C = 88 \text{ m}^2/\text{g}$$

$$4\text{h } 1000°C = 58 \text{ m}^2/\text{g}$$

$$10\text{h } 1000°C = 52 \text{ m}^2/\text{g}$$

$$4\text{h } 1100°C = 21 \text{ m}^2/\text{g}$$

$$10\text{h } 1200°C = 2,5 \text{ m}^2/\text{g}$$

L'analyse RX montre que jusqu'à 900°C le produit se présente sous la forme d'une phase cubique unique. A 1000°C la phase cubique évolue vers la phase tétragonale tandis qu'apparaît une phase minoritaire identifiable comme $La_2Zr_2O_7$.
Le produit présente un volume poreux total de 1,61 ml/g dont 61% est apporté par les pores de diamètre compris entre 5 nm et 500 nm.
La figure 1 est un porogramme du produit. En abscisse figure le diamètre des pores en Å, c'est à dire que 1e+02 correspond à une valeur de 10 nm, 1e+03 correspond à une valeur de 100 nm etc. En ordonnée figure le volume poreux exprimé en mL/g. On aperçoit bien sur le porogramme deux populations de mésopores dont les diamètres sont centrés autour de 60 nm et de 12 nm.

**Revendications**

1. Composition choisie parmi l'une des deux compositions suivantes :

   - Composition consistant en de l'oxyde de zirconium $ZrO_2$ en tant que constituant majoritaire de la composition et d'un additif qui est l'oxyde d'yttrium, présentant une surface spécifique après calcination sous air à 1000°C pendant 10 heures comprise entre 12 et 20 $m^2/g$ ;
   - Composition consistant en de l'oxyde de zirconium ZrOz en tant que constituant majoritaire de la composition et d'additifs qui sont l'oxyde d'yttrium et au moins un autre oxyde choisi parmi les oxydes de praséodyme, de lanthane et de néodyme, présentant une surface spécifique après calcination sous air à 1000°C pendant 10 heures comprise entre 12 et 55 $m^2/g$.

2. Composition selon la revendication 1, **caractérisée en ce qu'**elle présente une surface spécifique d'au moins 14 $m^2/g$ après calcination à 1000°C pendant 10 heures.

3. Composition selon la revendication 1 ou 2, **caractérisée en ce qu'**elle présente une surface spécifique d'au moins 25 $m^2/g$, après calcination à 900°C pendant 4 heures.

4. Composition selon l'une des revendications précédentes, **caractérisée en ce qu'**elle comprend comme additifs de l'oxyde d'yttrium et au moins un autre un autre additif choisi parmi les oxydes de praséodyme, de lanthane et de néodyme et **en ce qu'**elle présente une surface spécifique d'au moins 30 $m^2/g$ et plus particulièrement d'au moins 40 $m^2/g$ après calcination à 1000°C pendant 10 heures.

5. Composition selon l'une des revendications précédentes, **caractérisée en ce qu'**elle présente des mésopores dont la taille est comprise entre 5 nm et 500 nm et plus particulièrement entre 10 nm et 200 nm.

6. Composition selon l'une des revendications précédentes, **caractérisée en ce qu'**elle présente deux populations de mésopores dont la taille est centrée respectivement autour de 10 nm et de 60 nm.

7. Composition selon l'une des revendications précédentes, **caractérisée en ce que** la teneur en additif(s) est d'au plus 50%, cette teneur étant exprimée en masse d'oxyde de l'additif ou de l'ensemble des additifs dans le cas de compositions à plusieurs additifs, par rapport à la masse de la composition dans son ensemble (oxyde de zirconium et oxyde(s) d'additif(s)).

8. Composition selon la revendication 7, **caractérisée en ce que** la teneur en additif est comprise entre 10% et 40%.

9. Composition selon l'une des revendications précédentes, **caractérisée en ce qu'**elle présente une teneur en anion sulfate, exprimée par le rapport massique $SO_4^-$/ensemble de la composition, d'au plus 50 ppm.

10. Procédé de préparation d'une composition selon l'une des revendications précédentes, **caractérisé en ce qu'**il comprend les étapes suivantes :

    - (a) on forme un mélange comprenant des composes du zirconium, de l'additif et, le cas échéant; de l'aluminium ou du silicium ;
    - (b) on met en présence ledit mélange avec un composé basique ce par quoi on obtient un précipité ;
    - (c) on chauffe en milieu liquide ledit précipité ;
    - (d) on ajoute au précipité obtenu à l'étape précédente un composé choisi parmi les tensioactifs anioniques, les tensioactifs non ioniques, les polyéthylène-glycols, les acides carboxyliques et leurs sels et les tensioactifs du type éthoxylats d'alcools gras carboxyméthylés ;
    - (e) on calcine le précipité ainsi obtenu.

11. Procédé selon la revendication précédente, **caractérisé en ce qu'**on utilise comme composés du zirconium, de l'additif et de l'aluminium, des composés choisis parmi les nitrates, les acétates et les chlorures.

12. Procédé selon l'une des revendications 10 ou 11, **caractérisé en ce que** le chauffage du précipité de l'étape (c) est réalisé à une température d'au moins 100°C.

**13.** Système catalytique, **caractérisé en ce qu'**il comprend une composition selon l'une des revendications 1 à 9.

**14.** Système catalytique selon la revendication 13, **caractérisé en ce qu'**il comprend un métal de transition, notamment un métal précieux, supporté par la composition.

**15.** Procédé de traitement des gaz d'échappement des moteurs à combustion interne, **caractérisé en ce qu'**on utilise à titre de catalyseur un système catalytique selon la revendication 13 ou 14 ou une composition selon l'une des revendications 1 à 9.

**Patentansprüche**

**1.** Zusammensetzung, die aus einer der beiden folgenden Zusammensetzungen ausgewählt wird:

- eine Zusammensetzung, bestehend aus Zirkonoxid $ZrO_2$ als hauptsächlichem Bestandteil der Zusammensetzung und einem Additiv, das Yttriumoxid ist, mit einer spezifischen Oberfläche nach Kalzinierung in Luft bei 1000°C für 10 Stunden zwischen 12 und 20 $m^2$/g;
- eine Zusammensetzung, bestehend aus Zirkonoxid $ZrO_2$ als hauptsächlichem Bestandteil der Zusammensetzung und Additiven, bei denen es sich um Yttriumoxid und mindestens ein weiteres Additiv handelt, ausgewählt aus Oxiden von Praseodym, Lanthan und Neodym, mit einer spezifischen Oberfläche nach Kalzinierung in Luft bei 1000°C für 10 Stunden zwischen 12 und 55 $m^2$/g.

**2.** Zusammensetzung nach Anspruch 1, **dadurch gekennzeichnet, dass** sie eine spezifische Oberfläche von mindestens 14 $m^2$/g nach Kalzinierung bei 1000°C für 10 Stunden aufweist.

**3.** Zusammensetzung nach Anspruch 1 oder 2, **dadurch gekennzeichnet, dass** sie eine spezifische Oberfläche von mindestens 25 $m^2$/g nach Kalzinierung bei 900°C für 4 Stunden aufweist.

**4.** Zusammensetzung nach einem der vorhergehenden Ansprüche, **dadurch gekennzeichnet, dass** sie als Additive Yttriumoxid und mindestens ein weiteres ein weiteres Additiv, ausgewählt aus Oxiden von Praseodym, Lanthan und Neodym, umfasst, und dadurch, dass sie eine spezifische Oberfläche von mindestens 30 $m^2$/g und noch besser mindestens 40 $m^2$/g nach Kalzinierung bei 1000°C für 10 Stunden aufweist.

**5.** Zusammensetzung nach einem der vorhergehenden Ansprüche, **dadurch gekennzeichnet, dass** sie Mesoporen aufweist, deren Größe zwischen 5 nm und 500 nm und insbesondere zwischen 10 nm und 200 nm beträgt.

**6.** Zusammensetzung nach einem der vorhergehenden Ansprüche, **dadurch gekennzeichnet, dass** sie zwei Populationen von Mesoporen aufweist, deren Größe um 10 nm bzw. 60 nm herum zentriert ist.

**7.** Zusammensetzung nach einem der vorhergehenden Ansprüche, **dadurch gekennzeichnet, dass** der Gehalt an Additiv(en) höchstens 50 % beträgt, wobei dieser Gehalt als Masse an Oxid des Additivs oder der Gesamtheit der Additive im Fall von Zusammensetzungen mit mehreren Additiven, bezogen auf die Masse der Zusammensetzung in ihrer Gesamtheit (Zirkonoxid und Oxid(e) von Additiv(en)), ausgedrückt ist.

**8.** Zusammensetzung nach Anspruch 7, **dadurch gekennzeichnet, dass** der Gehalt an Additiv zwischen 10 % und 40 % beträgt.

**9.** Zusammensetzung nach einem der vorhergehenden Ansprüche, **dadurch gekennzeichnet, dass** sie einen Gehalt an Sulfatanionen, ausgedrückt als das Massenverhältnis $SO_4^-$/gesamte Zusammensetzung, von höchstens 50 Promille aufweist.

**10.** Verfahren zur Herstellung einer Zusammensetzung nach einem der vorhergehenden Ansprüche, **dadurch gekennzeichnet, dass** es die folgenden Schritte umfasst:

- (a) man stellt ein Gemisch her, das die Verbindungen von Zirkonium, des Additivs und gegebenenfalls von Aluminium oder Silizium umfasst;

- (b) man gibt zu diesem Gemisch eine basische Verbindung zu, wodurch man einen Niederschlag erhält;
- (c) man erhitzt den Niederschlag in einem flüssigen Medium;
- (d) man gibt zu dem im vorherigen Schritt erhaltenen Niederschlag eine Verbindung hinzu, die aus anionischen Tensiden, nicht-ionischen Tensiden, Polyethylenglykolen, Carbonsäuren und ihren Salzen und Tensiden des Typs carboxymethylierter Fettalkoholethoxylate ausgewählt wird;
- (e) man kalziniert den so erhaltenen Niederschlag.

11. Verfahren nach dem vorhergehenden Anspruch, **dadurch gekennzeichnet, dass** man als Verbindungen von Zirkonium, dem Additiv und Aluminium Verbindungen verwendet, die aus Nitraten, Acetaten und Chloriden ausgewählt sind.

12. Verfahren nach einem der Ansprüche 10 oder 11, **dadurch gekennzeichnet, dass** das Erhitzen des Niederschlags von Schritt (c) bei einer Temperatur von mindestens 100°C durchgeführt wird.

13. Katalysatorsystem, **dadurch gekennzeichnet, dass** es eine Zusammensetzung nach einem der Ansprüche 1 bis 9 umfasst.

14. Katalysatorsystem nach Anspruch 13, **dadurch gekennzeichnet, dass** es ein Übergangsmetall, insbesondere ein Edelmetall, umfasst, das von der Zusammensetzung getragen wird.

15. Verfahren zur Behandlung von Abgasen von Verbrennungsmotoren, **dadurch gekennzeichnet, dass** man als Katalysator ein Katalysatorsystem nach Anspruch 13 oder 14 oder eine Zusammensetzung nach einem der Ansprüche 1 bis 9 verwendet.

**Claims**

1. Composition chosen between one of the two following compositions:

    - a composition consisting of zirconium oxide $ZrO_2$ as major constituent of the composition, and an additive which is yttrium oxide, having a specific surface area after calcination in air at 1000°C for 10 hours between 12 and 20 $m^2/g$;
    - a composition consisting of zirconium oxide $ZrO_2$ as major constituent of the composition and additives which are yttrium oxide and at least one other additive chosen from the oxides of praseodymium, lanthanum and neodymium, having a specific surface area after calcination in air at 1000°C for 10 hours between 12 and 55 $m^2/g$.

2. Composition according to claim 1, **characterized in that** it has a specific surface area of at least 14 $m^2/g$ after calcination at 1000°C for 10 hours.

3. Composition according to claim 1 or 2, **characterized in that** it has a specific surface area of at least 25 $m^2/g$, after calcination at 900°C for 4 hours.

4. Composition according to one of the preceding claims, **characterized in that** it includes, as additives, yttrium oxide and at least one other one other additive chosen from the oxides of praseodymium, lanthanum, and neodymium, and **in that** it has a specific surface area of at least 30 $m^2/g$ and more particularly at least 40 $m^2/g$ after calcination at 1000°C for 10 hours.

5. Composition according to one of the preceding claims, **characterized in that** it has mesopores of which the size lies between 5 nm and 500 nm and more particularly between 10 nm and 200 nm.

6. Composition according to one of the preceding claims, **characterized in that** it has two populations of mesopores of which the size is centered around 10 nm and 60 nm respectively.

7. Composition according to one of the preceding claims, **characterized in that** the additive concentration is at most 50%, this concentration being expressed by weight of oxide of the additive or of all the additives in the case of compositions with several additives, based on the weight of the composition in its entirety (zirconium oxide and additive oxide(s)).

8. Composition according to claim 7, **characterized in that** the concentration of additive lies between 10% and 40%.

9. Composition according to one of the preceding claims, **characterized in that** it has a sulfate anion content, expressed by weight ratio $SO_4^-$/all the composition, of at most 50 ppm.

10. Method for preparing a composition according to one of the preceding claims, **characterized in that** it comprises the following steps:

    - (a) a mixture comprising compounds of zirconium, of the additive and, optionally, of aluminum or silicon is formed;
    - (b) said mixture is brought into the presence of a basic compound through which a precipitate is obtained;
    - (c) said precipitate is heated in a liquid medium;
    - (d) there is added to the precipitate obtained in the preceding step, a compound chosen from anionic surfactants, nonionic surfactants, polyethylene glycols, carboxylic acids and their salts and surfactants of the carboxymethylated fatty alcohol ethoxylate type;
    - (e) the precipitate obtained in this way is calcined.

11. Method according to the preceding claim, **characterized in that** compounds chosen from nitrates, acetates and chlorides are used as compounds of zirconium, the additive and aluminum.

12. Method according to one of claims 10 or 11, **characterized in that** the precipitate from step (c) is heated at a temperature of at least 100°C.

13. Catalyst system, **characterized in that** it comprises a composition according to one of claims 1 to 9.

14. Catalyst system according to claim 13, **characterized in that** it includes a transition metal, in particular a precious metal, supported by the composition.

15. Method for treating exhaust gases from internal combustion engines, **characterized in that** use is made as a catalyst of a catalyst system according to claim 13 or 14 or a composition according to one of claims 1 to 9.

Figure 1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9743214 A
- WO 9845212 A
- EP 0320345 A

**Littérature non-brevet citée dans la description**

- *The Journal of the American Chemical Society*, 1938, vol. 60, 309